# FASCICULE DE BREVET EUROPEEN

(11) **EP 3 708 037 B1**
(45) Date de publication et mention de la délivrance du brevet: **18.08.2021**
(21) Numéro de dépôt: 20160499.8
(22) Date de dépôt: 02.03.2020
(51) Int. Cl.: A47J 31/20

(54) **MACHINE DE PRÉPARATION DE BOISSONS INFUSÉES MUNIE D'UN FILTRE AMELIORÉ**
MASCHINE ZUR ZUBEREITUNG VON INFUSIERTEN GETRÄNKEN MIT VERBESSERTEM FILTER
MACHINE FOR PREPARING INFUSED BEVERAGES PROVIDED WITH AN IMPROVED FILTER

(30) Priorité: 11.03.2019 FR 1902468
(43) Date de publication de la demande: 16.09.2020
(73) Titulaire: SEB S.A., 69130 Ecully (FR)
(72) Inventeur: MORIN, Gilles, 69290 POLLIONNAY (FR); DOS SANTOS, Quentin, 69009 LYON (FR)
(74) Mandataire: SEB Développement

(56) Documents cités:
- WO-A1-2010/094026
- US-A- 1 884 070
- US-A1- 2017 049 260

## Description

La présente invention se rapporte au domaine technique général des machines de préparation de boissons infusées ou macérées en partant d'un liquide, notamment de l'eau et d'un ingrédient, notamment du thé ou du café, plus particulièrement des machines de préparation de boissons macérée en partant d'eau froide.

On connait du document US6135010 une machine de préparation de boissons infusées ou macérées à partir d'un ingrédient, notamment du café. La machine de préparation de boissons comporte une carafe de réception d'eau. La carafe comprend un fond, une paroi latérale munie d'un bec verseur et un filtre qui s'étend devant le bec verseur de telle manière que le liquide contenu dans la carafe traverse le filtre avant de passer dans le bec verseur. Un panier filtre, destiné à recevoir le café sous forme de mouture est agencé dans la carafe.

Lors de la préparation de la boisson, le panier filtre est immergé dans l'eau et laisse s'échapper des particules de café de différentes tailles. Les plus petites et légères restent en suspension dans l'eau et les plus lourdes tombent sur le fond. Au début du versage de la boisson, les particules les plus petites et légères sont retenues par le filtre agencé devant le bec verseur et vers la fin du versage, les particules les plus lourdes sont entrainées ensemble vers le filtre. Ainsi, le filtre est presque instantanément colmaté et l'utilisateur ne peut pas vider complètement la carafe.

De plus, le filtre n'est pas séparable de la carafe, ce qui est gênant pour le nettoyage du filtre et de la carafe.

On connait également du document US2017049260 une machine de préparation de boissons infusées ou macérées à partir d'un ingrédient.

Le but de la présente invention est de remédier aux inconvénients précités et de proposer une machine de préparation de boissons infusées ou macérées qui présente une ergonomie améliorée et un fonctionnement sûr pour un résultat optimisé.

Un autre but de l'invention est de proposer une machine de préparation de boissons infusée qui soit de conception simple et économique à mettre en œuvre.

Ces buts sont atteints avec une machine de préparation de boissons infusées ou macérées dans un liquide selon la revendication 1.

Ainsi, les cavités s'étendent transversalement à la direction d'un flux de boisson généré lors du versage pour capter et retenir les particules d'ingrédient les plus grosses et les plus lourdes qui se sont déposées sur le fond de la carafe lors de la préparation.

On comprend que la pluralité de cavités est située en amont du flux de boisson généré lors du versage et que le filtre est situé en aval du flux.

En conséquence, le filtre n'est pas colmaté par les particules les plus grosses et les plus lourdes qui sont retenues dans les cavités et le versage de la boisson peut être réalisé complètement.

Avantageusement, chaque cavité s'étend majoritairement de manière parallèle au fond de la carafe.

Ainsi, les cavités s'étendent latéralement à la direction du flux de boisson généré lors du versage, sur la trajectoire des particules d'ingrédient les plus grosses et les plus lourdes qui se déplacent vers le filtre.

De manière avantageuse, un plan de coupe vertical agencé dans la pluralité de cavités coupe au moins deux cavités.

Ainsi, le flux de boisson généré lors du versage qui entraine les particules d'ingrédient les plus grosses et les plus lourdes vers le filtre rencontre successivement au moins deux cavités. En conséquence, si une particule d'ingrédient n'est pas captée et retenue par la première cavité, elle peut l'être par la deuxième.

De préférence, la pluralité de cavités est agencée dans une portion incurvée inférieure qui présente une forme en arc-de-cercle dans une section transversale, parallèle au fond de la carafe.

Ainsi, le flux généré lors du versage et la gravité ont tendance à rassembler dans la portion incurvée inférieure les particules d'ingrédient les plus grosses et les plus lourdes qui se déplacent vers le filtre.

De préférence, dans une section transversale parallèle au fond, la carafe comporte une périphérie P, la portion incurvée inférieure s'étendant sur au moins 10% de la périphérie P.

Ainsi, en fin de versage, la majorité du flux des particules d'ingrédient les plus grosses et les plus lourdes qui se déplacent vers le filtre passe sur la portion incurvée inférieure.

Avantageusement, le bec verseur et la pluralité de cavités comportent un même plan de symétrie P1.

Ainsi, le flux généré lors du versage et la gravité ont tendance à rassembler vers le milieu de la portion incurvée les particules d'ingrédient les plus grosses et les plus lourdes qui se déplacent vers le filtre.

De préférence, le filtre comporte un tamis présentant une maille définissant des orifices de passage compris entre 30 et 50 micromètres.

Une telle taille d'orifices de passage permet de filtrer les particules d'ingrédient les plus petites et légères qui restent en suspension dans l'eau

Avantageusement, la paroi latérale présente une surface interne S et en ce que le tamis présente une surface S1 représentant au moins 5% de la surface S.

Ainsi le tamis présente une surface importante par rapport à la surface interne S. En conséquence, le tamis est moins soumis au colmatage par les particules d'ingrédient.

Selon l'invention, le filtre et la pluralité de cavités forment un sous-ensemble agencé de manière amovible dans la carafe.

Ainsi, le sous-ensemble peut être retiré de la carafe pour être nettoyé.

Avantageusement, la paroi latérale comporte une nervure de maintien du sous-ensemble formé par le filtre et la pluralité de cavités.

De préférence, la carafe comporte un panier filtre de réception de l'ingrédient à faire infuser ou à faire macérer qui est entrainé en rotation autour d'un axe Δ vertical lors de la préparation de la boisson.

Une telle disposition permet d'accélérer l'infusion ou la macération de l'ingrédient pour préparer la boisson avec une libération importante de particules d'ingrédient, notamment des particules lourdes qui se déposent sur le fond. La pluralité de cavités dimensionnées pour capter et retenir ces particules lors du versage de la boisson est donc particulièrement utile dans une telle construction.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
[Fig. 1] la figure 1 est une vue en perspective d'une machine de préparation de boissons infusées ou macérées selon un mode particulier de réalisation de l'invention, la carafe étant posée sur la base de réception et le panier filtre étant en position d'infusion,
[Fig. 2] la figure 2 est une vue en coupe suivant le plan de coupe II de la machine de préparation de boissons illustrée à la figure 1,
[Fig. 3] la figure 3 est une vue en perspective de la machine de préparation de bossons illustrée à la figure 1, le couvercle étant en position ouverte,
[Fig. 4] la figure 4 est une vue en coupe suivant le plan de coupe IV de la machine de préparation de boissons illustrée à la figure 3,
[Fig. 5] la figure 5 est une vue en perspective du dessous du panier filtre de la machine de préparation de boissons illustrée à la figure 1,
[Fig. 6] la figure 6 est une vue en perspective du dessous de la carafe de la machine de préparation de boissons illustrée à la figure 1,
[Fig. 7] la figure 7 est une vue en perspective du dessus de la base de réception de la machine de préparation de boissons illustrée à la figure 1,
[Fig. 8] la figure 8 est une vue en perspective du dessus de la carafe de la machine de préparation de boissons illustrée à la figure 1, la carafe comportant le sous-ensemble formé par le filtre et la pluralité de cavités,

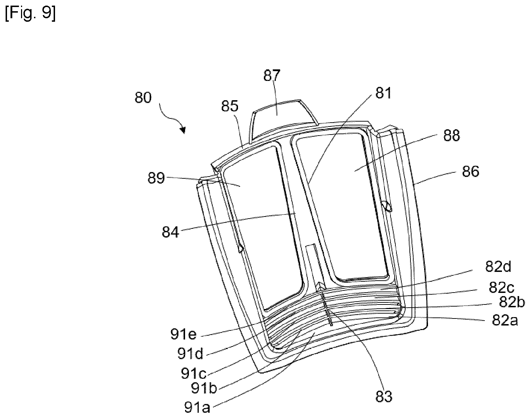

[Fig. 9] la figure 9 est une vue en perspective du dessus du sous-ensemble formé par le filtre et la pluralité de cavités de la carafe illustrée à la figure 8.

On notera que, dans ce document, les termes «horizontal», «vertical», «inférieur», «supérieur», «longitudinal», «transversal», «haut», «bas», employés pour décrire la machine de préparation de boissons, font référence à cette machine de préparation de boissons en situation d'usage, lorsqu'elle est posée sur un plan horizontal.

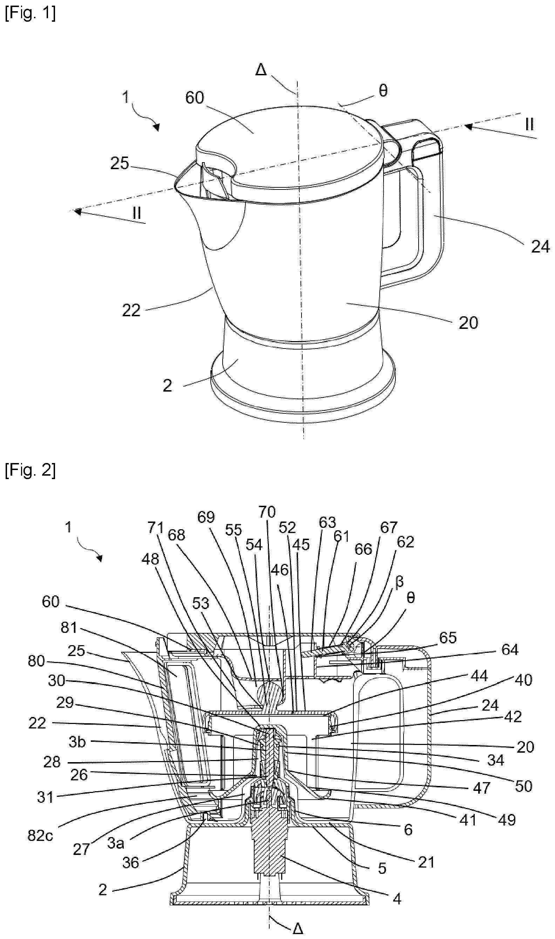

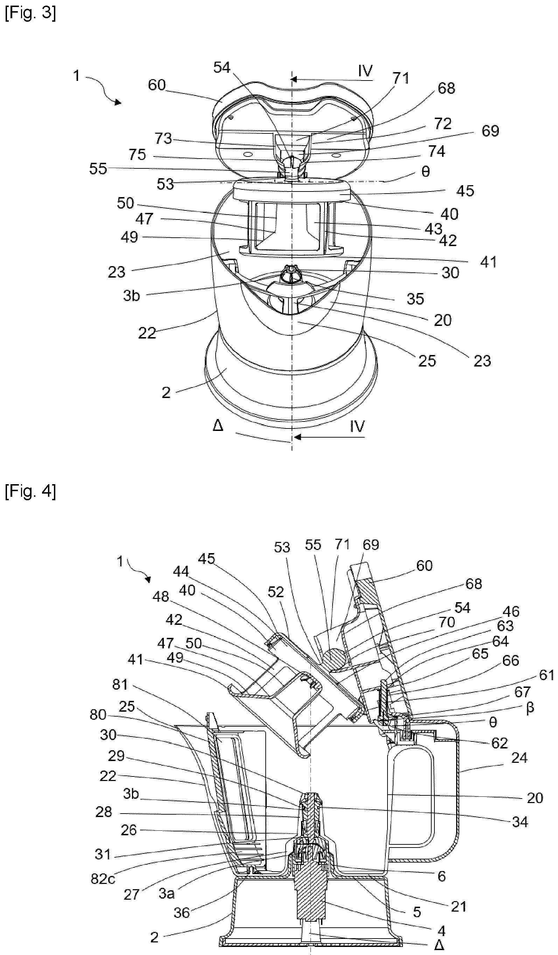

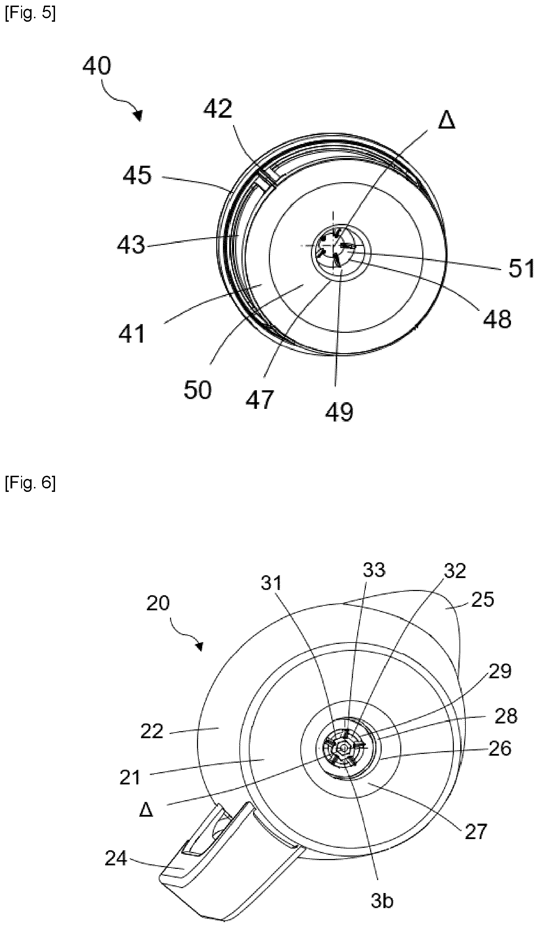

Tel que visible aux figures 1 à 7, une machine de préparation de boissons 1 comporte une base de réception 2, une carafe 20 munie d'un couvercle 60 et un panier filtre 40. Le panier filtre 40 est destiné à recevoir un ingrédient à faire infuser dans de l'eau chaude préalablement disposée dans la carafe 20 ou un ingrédient à faire macérer dans de l'eau froide, notamment du café. Le panier filtre 40 est agencé de manière rotative dans la carafe 20 et mis en rotation par un arbre d'entrainement 3a, 3b (Fig.2 et 4).

La carafe 20 repose sur la base de réception 2 lors de la préparation de la boisson et est retirée de la base de réception 2 notamment pour le service de la boisson ou le nettoyage. La base de réception 2 comporte un moteur 4 destiné à mettre en rotation l'arbre d'entrainement 3a, 3b qui est mobile autour d'un axe Δ vertical. Ainsi l'arbre d'entrainement comporte un arbre d'entrainement 3a agencé dans la base de réception 2 et un arbre d'entrainement 3b agencé dans la carafe 20.

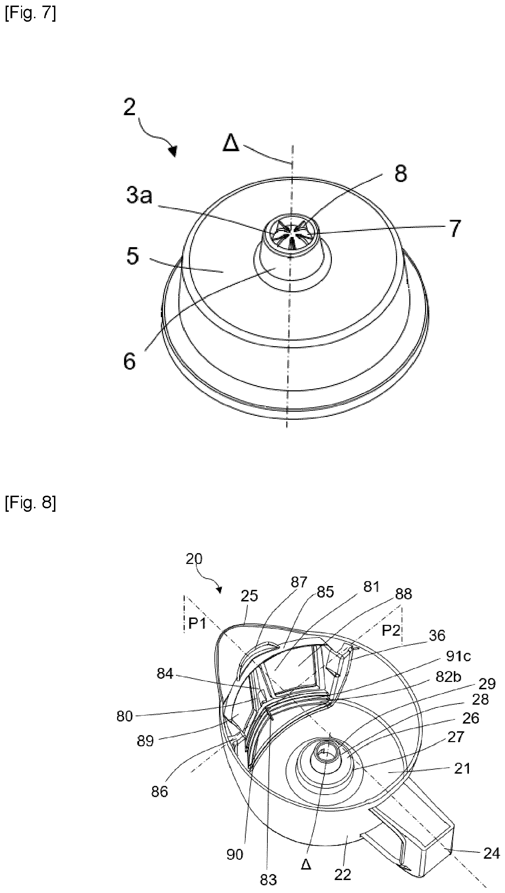

La base de réception 2 comprend une paroi supérieure 5 (fig. 7) munie d'une cheminée 6 centrale dans laquelle est logé l'arbre d'entrainement 3a qui se termine par un élément d'entrainement 7 muni de dents 8. L'arbre d'entrainement 3a agencé dans la base de réception 2 est destiné à entrainer l'arbre d'entrainement 3b agencé dans la carafe 20 ainsi que le panier filtre 40 en rotation autour de l'axe Δ. Le panier filtre 40 est également mobile dans la carafe 20 entre une position d'infusion dans laquelle le panier filtre 40 est immergé dans l'eau et accouplé avec l'arbre d'entrainement 3a, 3b et une position extraite d'égouttage dans laquelle le panier filtre 40 est agencé au-dessus du niveau de l'eau.

La carafe 20 comporte un fond 21 et une paroi latérale 22 sensiblement cylindrique dont l'extrémité libre délimite une ouverture supérieure 23 (Fig.3 et 4). La carafe 20 comporte une poignée 24 et un bec verseur 25 agencé de manière diamétralement opposée à la poignée 24. La carafe 20 est configurée pour recevoir le panier filtre 40 qui est agencé dans celle-ci de manière rotative lors de la préparation de la boisson.

La carafe 20 comporte une excroissance 26 d'axe Δ qui s'étend depuis le fond 21. L'excroissance 26 comporte une portion inférieure 27 de diamètre D1 suivie d'une portion supérieure 28 de diamètre D2, D1 étant supérieur à D2. La portion inférieure 27 forme un logement destiné à coopérer avec la cheminée 6 de la base de réception 2. L'arbre d'entrainement 3b agencé dans la carafe 20 est disposé dans la portion supérieure 28. La portion supérieure 28 comporte une extrémité libre 29 ouverte qui est coiffée par une extrémité supérieure 30 de l'arbre d'entrainement 3b agencé dans la carafe 20. L'arbre d'entrainement 3b agencé dans la carafe 20 comporte une extrémité inférieure 31 formant une cavité 32 destinée à coopérer avec l'élément d'entrainement 7 de l'arbre d'entrainement 3a agencé dans la base de réception 2 lorsque la carafe 20 repose sur la base de réception 2. La cavité 32 comporte des dents 33 qui coopèrent avec les dents 8 de l'élément d'entrainement 7 pour transmettre la rotation du moteur 4 à l'arbre d'entrainement 3b agencé dans la carafe 20. Un joint d'étanchéité 34 est agencé entre l'arbre d'entrainement 3b agencé dans la carafe 20 et la portion supérieure 28.

Le panier filtre 40 comporte un fond 41 et une paroi latérale 42 munie d'ouvertures 43. Un tamis à mailles fines (non représenté sur les figures) recouvre les ouvertures 43. La paroi latérale 42 est sensiblement cylindrique et son extrémité libre délimite une ouverture supérieure 44. Le panier filtre 40 comporte un couvercle 45 qui est destiné à être rapporté sur l'extrémité libre de la paroi latérale 42 par vissage pour fermer l'ouverture supérieure 44. Le couvercle 45 comporte des perforations 46 pour permettre l'échappement de l'air emprisonné sous le couvercle 45.

Le panier filtre 40 comporte un conduit tubulaire 47 d'axe Δ qui s'étend depuis le fond 41 et qui qui comprend une extrémité libre fermée 48. Le conduit tubulaire 47 comporte une portion conique 49 et une portion sensiblement cylindrique 50. L'extrémité libre fermée 48 est destinée à coopérer avec l'extrémité supérieure 30 de l'arbre d'entrainement 3b agencé dans la carafe 20. La portion sensiblement cylindrique 50 coopère avec la portion supérieure 28 de l'excroissance 26 de la carafe 20 pour guider en rotation le panier filtre 40 autour de l'axe Δ. L'extrémité supérieure 30 de l'arbre d'entrainement 3b agencé dans la carafe 20 comporte des protubérances 35 qui coopèrent avec des logements 51 de formes complémentaires (Fig.4) aménagés dans l'extrémité libre fermée 48 du conduit tubulaire 47 pour entrainer en rotation le panier filtre 40. L'extrémité libre fermée 48 du panier filtre 40 repose sur l'extrémité supérieure 30 de l'arbre d'entrainement 3b agencé dans la carafe 20. L'extrémité libre fermée 48 et l'extrémité supérieure 30 forment un dispositif de butée inférieur qui empêche le panier filtre 40 de se déplacer vers le bas, le long de l'axe Δ.

Le couvercle 45 du panier filtre 40 comporte une paroi supérieure 52 et une tige cylindrique 53. La tige cylindrique 53 s'étend le long de l'axe Δ, depuis la paroi supérieure 52 et se termine par une portion sphérique 54.

Le couvercle 60 de la carafe 20 est mobile en rotation autour d'un axe θ, perpendiculaire à l'axe Δ, entre une position fermée (Fig.1 et 2) dans laquelle le couvercle 60 recouvre l'ouverture supérieure 23 et une position ouverte (Fig.3 et 4) dans laquelle le couvercle 60 est écarté de l'ouverture supérieure 23 de la carafe 20. Le couvercle 60 comporte une position intermédiaire instable entre la position fermée et la position ouverte qui sont des positions stables. La carafe 20 comporte un moyen de rappel du couvercle 60 en position fermée ou en position ouverte (Fig.2 et 4). Le moyen de rappel comporte une tige cylindrique 61 dont une extrémité 62 est articulée en rotation autour d'un axe β parallèle à l'axe θ et décalé de l'axe θ vers le centre et le haut de la carafe 20. La tige cylindrique 61 comporte une extrémité libre 63 qui est agencée de manière coulissante dans une ouverture traversante 65 aménagée dans une paroi 64 du couvercle 60. Le moyen de rappel comporte également un ressort 66 de compression qui est agencé autour de la tige cylindrique 61. Le ressort 66 prend appui à une première extrémité sur une butée 67 agencée sur la tige cylindrique 61 et proche de l'axe β. Le ressort 66 prend appui à une deuxième extrémité sur la paroi 64. L'axe β étant décalé de l'axe θ vers le centre et le haut de la carafe 20, le ressort 66 tend à rappeler le couvercle 60 dans la position stable la plus proche à partir de la position intermédiaire instable.

Le couvercle 60 comporte une paroi inférieure 68 qui est destinée à coopérer avec la portion sphérique 54 lorsque le couvercle est en position fermée (Fig.2). La portion sphérique 54 et la paroi inférieure 68 du couvercle 60 forment un contact ponctuel sphère/plan lorsque le panier filtre 40 est en position d'infusion et le couvercle 60 en position fermée. La portion sphérique 54 et la paroi inférieure 68 forment ainsi un dispositif de butée supérieur qui empêche le panier filtre 40 de se déplacer vers le haut, le long de l'axe Δ.

Le panier filtre 40 est mobile le long de l'axe Δ avec un jeu réduit de quelques millimètres, notamment inférieur à un millimètre entre une position basse et une position haute. Quelle que soit sa position le long de l'axe Δ, le panier filtre 40 est entrainé en rotation par l'arbre d'entrainement 3a, 3b. Dans sa position d'infusion, le panier filtre 40 est maintenu entre la position basse dans laquelle l'extrémité libre fermée 48 du panier filtre 40 est en butée sur l'extrémité supérieure 30 de l'arbre d'entrainement 3b agencé dans la carafe 20 et la position haute dans laquelle la portion sphérique 54 est en butée sur la paroi inférieure 68.

Le panier filtre 40 s'étend le long de l'axe Δ sur une hauteur H. L'excroissance 26 de forme complémentaire au conduit tubulaire 47 s'étend depuis le fond 21 de la carafe 20 sur plus de la moitié de la hauteur H du panier filtre 40.

La tige cylindrique 53 et la portion sphérique 54 du panier filtre 40 forment un organe coulissant 55 du type tasseau en T et le couvercle 60 comporte une rainure 69 du type rainure en T agencée sur la paroi inférieure 68. L'organe coulissant 55 du type tasseau en T et la rainure 69 du type rainure en T forment un dispositif d'accouplement du panier filtre 40 sur le couvercle 60 qui permet de faire passer le panier filtre 40 de la position d'infusion lorsque le couvercle 60 est en position fermée à la position d'égouttage lorsque le couvercle 60 est en position ouverte.

La rainure 69 comporte un plan de symétrie vertical passant par l'axe Δ et perpendiculaire à l'axe θ. La rainure 69 comporte une extrémité fermée 70 contre laquelle l'organe coulissant 55 est en appui lorsque le panier filtre 40 est en position d'égouttage et une extrémité ouverte 71 par laquelle l'organe coulissant 55 peut passer. Ainsi, le panier filtre 40 est mobile par rapport au couvercle 60 entre la position d'égouttage dans laquelle l'organe coulissant 55 est en appui sur l'extrémité fermée 70 et une position extraite dans laquelle l'organe coulissant 55 est sorti de la rainure 69 par l'extrémité ouverte 71. La rainure 69 comporte des parois 72, 73 munies chacune d'une portion arrondie 74, 75 d'extrémité qui coopèrent avec la portion sphérique 54 lors de la manipulation du couvercle 60, pour agir sur le panier filtre 40, notamment pour l'amener dans la position d'égouttage.

Conformément aux figures 7 et 8, la carafe 20 comporte un sous-ensemble 80 formé par un filtre 81 et une pluralité de cavités 82a, 82b, 82c, 82d. La pluralité de cavités 82a, 82b, 82c, 82d est agencée dans une portion incurvée inférieure 83 du sous-ensemble 80. La portion incurvée inférieure 83 s'étend depuis le fond 21 vers le haut et de manière sensiblement parallèle à la paroi latérale 22. Le filtre 81 est agencé dans une portion incurvée supérieure 84 du sous-ensemble 80. La portion incurvée supérieure 84 s'étend depuis la portion incurvée inférieure 83 vers le haut, devant le bec verseur 25 jusqu'à une extrémité libre 85 alignée avec l'ouverture supérieure 23 de la carafe 20. Le sous-ensemble 80 est agencé de manière amovible dans la carafe 20. La carafe 20 comporte une nervure 36 et le sous-ensemble 80 comporte un cadre périphérique 86. Le cadre périphérique 86 est destiné à coopérer avec la nervure 36 pour maintenir le sous-ensemble 80 dans la carafe 20. L'extrémité libre 85 comporte une excroissance de matière 87 qui forme une zone de préhension du sous-ensemble 80.

Le bec verseur 25 et le sous-ensemble 80 comportent un même plan de symétrie P1 qui passe par la poignée 24. Le filtre 81 comporte deux tamis 88, 89 présentant chacun une maille définissant des orifices de passage compris entre 30 et 50 micromètres (non représentés sur les figures). Les deux tamis 88, 89 sont agencés de part et d'autre du plan de symétrie P1. Le cadre périphérique 86 et la nervure 36 s'étendent dans un plan P2 sensiblement perpendiculaire au plan de symétrie P1. Le sous-ensemble 80 présente une forme projetée sur le plan P2 trapézoïdale.

La portion incurvée inférieure 83 comporte une paroi de fond 90 parallèle à la paroi latérale 22 de la carafe 20, depuis laquelle s'étendent parallèlement au fond 21 une succession de parois incurvées 91a, 91b, 91c, 91d, 91e qui définissent la pluralité de cavités 82a, 82b, 82c, 82d. Ainsi, chaque cavité 82a, 82b, 82c, 82d présente une ouverture en arc-de-cercle, orientée vers l'intérieur de la carafe 20. Dans une section transversale parallèle au fond 21, la paroi latérale 22 de la carafe 20 comporte une périphérie P et la portion incurvée inférieure 83 s'étend sur au moins 10% de la périphérie P.

En fonctionnement, l'utilisateur positionne la carafe 20 sur la base de réception 2, déplace le couvercle 60 dans la position ouverte pour amener le panier filtre 40 dans la position d'égouttage. Il saisit le panier filtre 40 et le déplace vers le haut. L'organe coulissant 55 formé par la tige cylindrique 53 et la portion sphérique 54 est déplacé pour sortir de la rainure 69 et ainsi le panier filtre 40 est désolidarisé du couvercle 60, en position extraite. L'utilisateur met alors de l'eau dans la carafe 20 et rempli le panier filtre 40 avec un ingrédient à faire infuser ou à faire macérer, par exemple du café. Il positionne ensuite le panier filtre 40 sur le couvercle 60 en glissant l'organe coulissant 55 dans la rainure 69 pour l'amener dans la position d'égouttage. Il bascule ensuite le couvercle 60 dans la position fermée pour amener le panier filtre 40 dans la position d'infusion dans la carafe. L'utilisateur lance alors un cycle de préparation de boisson. Le moteur 4 est activé et l'arbre d'entrainement 3a agencé dans la base de réception 2 entraine en rotation l'arbre d'entrainement 3b agencé dans la carafe 20 ainsi que le panier filtre 40. L'ingrédient à faire infuser ou à faire macérer n'étant pas encore imprégné par l'eau, le panier filtre 40 flotte dans l'eau et la portion sphérique 54 vient en appui sur la paroi inférieure 68 pour former un dispositif de butée supérieur qui empêche le panier filtre 40 de se déplacer vers le haut, le long de l'axe Δ. Lorsque l'ingrédient à faire infuser ou à faire macérer est suffisamment imprégné par l'eau, le panier filtre 40 se déplace le long de l'axe Δ vers le fond 21 de la carafe 20. L'extrémité libre fermée 48 du panier filtre 40 repose sur l'extrémité supérieure 30 de l'arbre d'entrainement 3b agencé dans la carafe 20. L'extrémité libre fermée 48 et l'extrémité supérieure 30 forment un dispositif de butée inférieur qui empêche le panier filtre 40 de se déplacer vers le bas, le long de l'axe Δ.

Une fois la boisson préparée, l'utilisateur déplace le couvercle 60 dans la position ouverte pour amener le panier filtre 40 dans la position d'égouttage. Après quelques minutes, l'eau contenue dans le panier filtre 40 s'est égouttée et l'utilisateur peut retirer le panier filtre 40 puis refermer le couvercle 60. L'utilisateur peut alors saisir la poignée 24 de la carafe 20 pour servir la boisson. La boisson passe à travers les tamis 88, 89 du filtre 81 vers le bec verseur 25 pour retenir des particules fines d'ingrédient et, en fin de versage, des particules lourdes qui se sont déposées sur le fond 21 sont entrainées vers la pluralité de cavités 82a, 82b, 82c, 82d, puis sous l'effet de la gravité tombent dans ces cavités 82a, 82b, 82c, 82d. Les particules lourdes qui ne sont pas piégées dans les cavités 82a, 82b, 82c, 82d sont retenues par les tamis 88, 89 du filtre 81.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir du domaine de protection de l'invention.

Dans une variante de réalisation, les cavités sont agencées en quinconce sur au moins deux rangées agencées transversalement au flux de boisson généré lors du versage.

## Revendications

1. Machine de préparation de boissons (1) infusées ou macérées dans un liquide à partir d'un ingrédient, ladite machine de préparation de boissons (1) comportant une carafe (20) de réception du liquide comprenant un fond (21), une paroi latérale (22) munie d'un bec verseur (25) et un filtre (81) qui s'étend devant le bec verseur (25) de telle manière que le liquide contenu dans la carafe (20) traverse le filtre (81) avant de passer dans le bec verseur (25), la carafe (20) comportant sous le filtre (81), à proximité du fond (21) une pluralité de cavités (82a, 82b, 82c, 82d) s'étendant transversalement à la paroi latérale (22) en débouchant dans la carafe (20), lesdites cavités (82a, 82b, 82c, 82d) étant dimensionnées pour capter et retenir des particules d'ingrédient qui se sont déposées sur le fond (21) de la carafe (20) lors de la préparation de la boisson et qui se déplacent vers le filtre (81) lors du versage de la boisson, **caractérisée en ce que** le filtre (81) et la pluralité de cavités (82a, 82b, 82c, 82d) forment un sous-ensemble (80) agencé de manière amovible dans la carafe (20).

2. Machine de préparation de boissons (1) selon la revendication 1, **caractérisée en ce que** chaque cavité (82a, 82b, 82c, 82d) s'étend majoritairement de manière parallèle au fond (21) de la carafe (20).

3. Machine de préparation de boissons (1) selon l'une quelconque des revendications 1 à 2, **caractérisée en ce qu'**un plan de coupe vertical agencé dans la pluralité de cavités (82a, 82b, 82c, 82d) coupe au moins deux cavités.

4. Machine de préparation de boissons (1) selon l'une quelconque des revendications 1 à 3, **caractérisée en ce que** la pluralité de cavités (82a, 82b, 82c, 82d) est agencée dans une portion incurvée inférieure (83) qui présente une forme en arc-de-cercle dans une section transversale, parallèle au fond (21) de la carafe (20).

5. Machine de préparation de boissons (1) selon la revendication 4, **caractérisée en ce que**, dans une section transversale parallèle au fond (21), la carafe (20) comporte une périphérie P, la portion incurvée inférieure (83) s'étendant sur au moins 10% de la périphérie P.

6. Machine de préparation de boissons (1) selon l'une quelconque des revendications 1 à 5, **caractérisée en ce que** le bec verseur (25) et la pluralité de cavités (82a, 82b, 82c, 82d) comportent un même plan de symétrie P1.

7. Machine de préparation de boissons (1) selon l'une quelconque des revendications 1 à 6, **caractérisée en ce que** le filtre (81) comporte un tamis (88, 89) présentant une maille définissant des orifices de passage compris entre 30 et 50 micromètres.

8. Machine de préparation de boissons (1) selon la revendication 7, **caractérisée en ce que** la paroi latérale (22) présente une surface interne S et **en ce que** le tamis (88, 89) présente une surface S1 représentant au moins 5 % de la surface S.

9. Machine de préparation de boissons (1) selon l'une quelconque des revendications 1 à 8, **caractérisée en ce que** la paroi latérale (22) comporte une nervure (36) de maintien du sous-ensemble (80) formé par le filtre (81) et la pluralité de cavités (82a, 82b, 82c, 82d).

10. Machine de préparation de boissons (1) selon l'une quelconque des revendications 1 à 9, **caractérisée en ce que** la carafe (20) comporte un panier filtre (40) de réception de l'ingrédient à faire infuser ou à faire macérer, qui est entrainé en rotation autour d'un axe Δ vertical.

## Patentansprüche

1. Maschine zur Zubereitung von Getränken (1), die in einer Flüssigkeit aufgegossen oder eingeweicht werden, aus einer Zutat, wobei die Maschine zur Zubereitung von Getränken (1) eine Karaffe (20) zur Aufnahme der Flüssigkeit beinhaltet, die einen Boden (21), eine Seitenwand (22), die mit einer Ausgusstülle (25) versehen ist, und einen Filter (81) umfasst, der sich derart vor der Ausgusstülle (25) erstreckt, dass die in der Karaffe (20) enthaltene Flüssigkeit den Filter (81) durchquert, bevor sie in der Ausgusstülle (25) durchläuft, wobei die Karaffe (20) unter dem Filter (81) in der Nähe des Bodens (21) eine Vielzahl von Hohlräumen (82a, 82b, 82c, 82d) beinhaltet, die sich quer zur Seitenwand (22) erstrecken, in die Karaffe (20) mündend, wobei die Hohlräume (82a, 82b, 82c, 82d) bemessen sind, um Zutatenpartikel, die sich bei der Zubereitung des Getränkes am Boden (21) der Karaffe abgesetzt haben, und die sich beim Ausgießen des Getränkes zu dem Filter (81) bewegen, zu erfassen und zurückzuhalten, **dadurch gekennzeichnet, dass** der Filter (81) und die Vielzahl von Hohlräumen (82a, 82b, 82c, 82d) eine Unterbaugruppe (80) bilden, die in abnehmbarer Form in der Karaffe (20) angeordnet ist.

2. Maschine zur Zubereitung von Getränken (1) nach Anspruch 1, **dadurch gekennzeichnet, dass** sich jeder Hohlraum (82a, 82b, 82c, 82d) mehrheitlich parallel zum Boden (21) der Karaffe (20) erstreckt.

3. Maschine zur Zubereitung von Getränken (1) nach einem der Ansprüche 1 bis 2, **dadurch gekennzeichnet, dass** eine vertikale Schnittebene, die in der Vielzahl von Hohlräumen (82a, 82b, 82c, 82d) angeordnet ist, mindestens zwei Hohlräume schneidet.

4. Maschine zur Zubereitung von Getränken (1) nach einem der Ansprüche 1 bis 3, **dadurch gekennzeichnet, dass** die Vielzahl von Hohlräumen (82a, 82b, 82c, 82d) in einem gekrümmten unteren Abschnitt (83) angeordnet ist, der in einem Querschnitt parallel zum Boden (21) der Karaffe (20) eine Kreisbogenform aufweist.

5. Maschine zur Zubereitung von Getränken (1) nach Anspruch 4, **dadurch gekennzeichnet, dass** die Karaffe (20) in einem Querschnitt parallel zum Boden (21) eine Peripherie (P beinhaltet, wobei sich der gekrümmte untere Abschnitt (83) über mindestens 10% der Peripherie (P erstreckt.

6. Maschine zur Zubereitung von Getränken (1) nach einem der Ansprüche 1 bis 5, **dadurch gekennzeichnet, dass** die Ausgusstülle (25) und die Vielzahl von Hohlräumen (82a, 82b, 82c, 82d) eine selbe Symmetrieebene P1 beinhalten.

7. Maschine zur Zubereitung von Getränken (1) nach einem der Ansprüche 1 bis 6, **dadurch gekennzeichnet, dass** der Filter (81) ein Sieb (88, 89) beinhaltet, das ein Maschengeflecht aufweist, das Durchgangsöffnungen definiert, die zwischen 30 und 50 Mikrometer enthalten sind.

8. Maschine zur Zubereitung von Getränken (1) nach Anspruch 7, **dadurch gekennzeichnet, dass** die Seitenwand (22) eine Innenoberfläche S aufweist, und dadurch, dass das Sieb (88, 89) eine Oberfläche S1 aufweist, die mindestens 5% der Oberfläche S darstellt.

9. Maschine zur Zubereitung von Getränken (1) nach einem der Ansprüche 1 bis 8, gekennzeichnet, dass die Seitenwand (22) eine Rippe (36) zum Halten der Unterbaugruppe (80) beinhaltet, die durch den Filter (81) und die Vielzahl von Hohlräumen (82a, 82b, 82c, 82d) gebildet wird.

10. Maschine zur Zubereitung von Getränken (1) nach einem der Ansprüche 1 bis 9, **dadurch gekennzeichnet, dass** die Karaffe (20) einen Filterkorb (40) zur Aufnahme der Zutat zum Aufgießen oder Einweichen lassen beinhaltet, der um eine vertikale Achse Δ herum in Drehung angetrieben wird.

## Claims

1. Machine for preparing drinks (1) infused or macerated in a liquid from an ingredient, said machine for preparing drinks (1) comprising a decanter (20) for receiving liquid comprising a bottom (21), a side wall (22) provided with a pouring spout (25) and a filter (81) which extends in front of the pouring spout (25) such that the liquid contained in the decanter (20) passes through the filter (81) before passing into the pouring spout (25), the decanter (20) comprising under the filter (81), in the proximity of the bottom (21), a plurality of cavities (82a, 82b, 82c, 82d) extending transversally to the side wall (22) by leading into the decanter (20), said cavities (82a, 82b, 82c, 82d) being sized to collect and retain ingredient particles which are deposited on the bottom (21) of the decanter (20) during the preparation of the drink and which are moved towards the filter (81) during the pouring of the drink, **characterised in that** the filter (81) and the plurality of cavities (82a, 82b, 82c, 82d) form a subassembly (80) removably arranged in the decanter.

2. Machine for preparing drinks (1) according to claim 1, **characterised in that** each cavity (82a, 82b, 82c, 82d) extends mainly in a parallel manner to the bottom (21) of the decanter (20).

3. Machine for preparing drinks (1) according to any one of claims 1 to 2, **characterised in that** a cross-sectional, vertical plane arranged in the plurality of cavities (82a, 82b, 82c, 82d) cuts at least two cavities.

4. Machine for preparing drinks (1) according to any one of claims 1 to 3, **characterised in that** the plurality of cavities (82a, 82b, 82c, 82d) is arranged in a lower curved portion (83) which has a circular arc shape in a transversal cross-section, parallel to the bottom (21) of the decanter (20).

5. Machine for preparing drinks (1) according to claim 4, **characterised in that**, in a transverse cross-section parallel to the bottom (21), the decanter (20) comprises a periphery P, the lower curved portion (83) extending over at least 10% of the periphery P.

6. Machine for preparing drinks (1) according to any one of claims 1 to 5, **characterised in that** the pouring spout (25) and the plurality of cavities (82a, 82b, 82c, 82d) comprise one same plane of symmetry P1.

7. Machine for preparing drinks (1) according to any one of claims 1 to 6, **characterised in that** the filter (81) comprises a sieve (88, 89) having a mesh defining passage orifices comprised between 30 and 50 micrometres.

8. Machine for preparing drinks (1) according to claim 7, **characterised in that** the side wall (22) has an inner surface S and **in that** the sieve (88, 89) has a surface S1 representing at least 5% of the surface S.

9. Machine for preparing drinks (1) according to any one of claims 1 to 8, **characterised in that** the side wall (22) comprises a groove (36) for maintaining the subassembly (80) formed by the filter (81) and the plurality of cavities (82a, 82b, 82c, 82d).

10. Machine for preparing drinks (1) according to any one of claims 1 to 9, **characterised in that** the decanter (20) comprises a filter basket (40) for receiving the ingredient to be infused or to be macerated, which is rotated about a vertical axis Δ.
